# EUROPEAN PATENT SPECIFICATION

(11) **EP 1 745 642 B1**
(45) Date of publication and mention of the grant of the patent: **27.07.2011**
(21) Application number: 05734532.4
(22) Date of filing: 14.04.2005
(51) Int. Cl.: H04N 5/262, G09F 19/12

(54) **IMAGE PRESENTATION**
BILDPRÄSENTATION
PRESENTATION D'IMAGE

(30) Priority: 23.04.2004 GB 0409014; 23.03.2005 GB 0505899
(43) Date of publication of application: 24.01.2007
(73) Proprietor: Vanquish Events Limited, Blackburn, BB1 7AP (GB)
(72) Inventor: JAN, Korab Linemark (UK) Limited, Haslingden BB4 5HR (GB)
(74) Representative: Holmes, Matthew Peter
(86) International application number: PCT/GB2005/001430
(87) International publication number: WO 2005/104535

(56) References cited:
- DE-A1- 19 937 037
- DE-U- 20 317 063
- US-A- 3 631 619

## Description

The present invention relates to the presentation of images. More particularly, the present invention relates to a method of presenting images optimised for viewing from a predetermined viewing position relative to a predetermined image position. The image may be viewed remotely from the optimum viewing position via an image recording and/or transmitting device, such as a television camera or the like, positioned at the predetermined viewing position. The invention is particularly suited for the presentation of images of an advertising or promotional nature at public events, such as sporting events, for the benefit of a television (TV) audience.

The conventional way of presenting advertisements and the like at sporting events is to mount the respective image on an advertising hoarding. For instance, at a football match or similar event advertising hoardings are positioned around the pitch to be viewed by both spectators present at the football match and by a television audience. The hoardings are typically of the order of 1 meter high and are generally erected perpendicular to the playing surface parallel to the pitch side lines and goal lines. Similarly, hoardings may be placed in any available space between the pitch and the spectators.

The size of advertisements presented in this way is limited by the need to ensure that the hoardings do not obstruct spectators' views. In some cases compromises are made and the first few rows of seats in a spectator stand may be left empty in order to accommodate advertising hoardings. In addition, it is generally the case that the viewing spectators present at the football match or other event are less significant than the TV audience from an advertising perspective. However, the positioning of advertising hoardings necessary to conform to the orientation of the pitch and the available space is not necessarily optimum for viewing through a television camera positioned in a fixed mounting position.

With greater emphasis now placed on TV viewing audiences, in recent years methods have been developed for presenting advertising images to present an optimum image when viewed from a television camera mounted in a fixed position. One such method is disclosed in European patent number 0599920. This discloses a method of presenting the image on the ground surface but transforming the image so that when viewed from a TV camera positioned at a fixed point above the ground the image appears to stand up from the ground, for instance at 90°, and facing the TV camera. The image transformation is referred to as an "inverse perspective transformation" and comprises three elements to counter natural perspective effects. Firstly the image is stretched along the line of sight from the camera mounting point. Secondly, the length and/or spacing of the features extending along the line of sight is increased with distance from the viewing point. These two transformations compensate for the apparent contraction of the image with increasing distance from the camera. Thirdly, lines and other features extending along the line of sight are diverged to counter the natural "vanishing" effect. The net effect is that the spacing, shape and relative size of elements of the original image are substantially preserved when viewed from the TV camera point so that the image appears as originally intended and in particular appears to extend at an angle, preferably perpendicularly, to the ground.

A similar method is disclosed in European patent number 0 968 495. This proposes a modification to the basic inverse transformation process described above to achieve two aims. The first is to present the image so that it does not appear to face the viewing point, but rather extends away at an angle so that for instance the image can appear to be aligned with a football pitch goal line etc which is similarly angled to a TV camera point. Secondly, the image is transformed in such a way as to give characters and other image features a three-dimensional "block" appearance.

Image presentation methods such as those mentioned above have enjoyed success in recent years. In addition to presenting images in a way optimised for viewing through a TV camera, these methods also allow images to be placed in locations where physical hoardings would not be permitted, for instance very close to the side lines of a football or rugby pitch where a traditional hoarding would present an unacceptable hazard. However, these methods do suffer from the disadvantage that a relatively large footprint is required for presentation of the image. The necessary space is not always available and/or the number of different advertisements that may be placed over a given surface area may be reduced.

It is an object of the present invention to obviate or mitigate the above disadvantages.

Examples of image presentation methods using aspects of inverse perspective transformation are disclosed in DE 203 17 063, DE 199 37 037 and US 3,631,619. DE 203 17 063 discloses the features according to the pre-characterising part of claim 1 of the present application.

According to the present invention there is provided a method of presenting an image at a predetermined image position defined by a substantially horizontal surface and optimised for viewing along a line of sight from a predetermined viewing position defined by a surface, the method comprising transforming the image by applying an image transformation to the original image with respect to the intended line of sight and intended orientation of the image at said predetermined image position, thereby producing a transformed actual image, and placing the transformed actual image in said orientation at said predetermined image position, wherein the actual image is inclined towards the predetermined viewing position at an acute angle to the horizontal, wherein the transferred actual image is laid on a support which raises the rear of the image with respect to the predetermined viewing position above said surface and to a height above that of the front of the image with respect to the predetermined viewing position, characterised in that said support is a substantially wedge shaped support structure constructed from an impact absorbing material.

The image transformation preferably comprises an inverse perspective transformation and/or laterally skewing the original image.

With preferred embodiments of the image presentation method according to the present invention, an apparent image of a given size can be presented with an actual image of a much smaller footprint than is possible using conventional inverse perspective image presentation techniques. That is, presenting the image on an inclined surface produces a significant increase in apparent image size from a relatively small angle of inclination. For example the present invention has proved effective with an angle of inclination less than 7 and as little of the order of 1.

Constructing the support structure from an impact absorbing material, such as a foam material, enables the image to be presented at positions where more conventional structures, such as conventional advertising hoardings, would be seen to present an unacceptable hazard.

The term "inverse perspective transformation" is defined below. It will be appreciated that in the present context the term is used to refer to any transformation intended to compensate for any single natural perspective effect, or any combination of natural perspective effects. Moreover, such transformation may produce an apparent image which is raised from the horizontal at an angle substantially greater than the angle of inclination of the actual image. For instance, in many cases it would be possible to present an apparent image extending vertically upright.

The present invention is particularly adapted for the presentation of images optimised for imaging via a television camera or the like placed at the predetermined viewing position. However, it will be appreciated that the invention is not limited to the presentation of images via a television camera or the like, or indeed to images presented at sporting and other spectator events. For instance, at a sporting event the predetermined viewing position could correspond to a VIP area, such as a directors box or a sponsors lounge etc. Thus, the present invention might be used to present an image to be viewed by an individual positioned at, or passing through, the predetermined viewing position. As another example, an image intended for presentation to a driver of a vehicle could be positioned to present the optimised apparent image when the driver/vehicle passes a particular predetermined viewing position.

Other preferred and advantageous features of the present invention will be apparent from the following description.

Embodiments of the present invention will now be described, by way of example only, with reference to the accompanying drawings, in which:
Figure 1 illustrates an original image to be presented in accordance with the present invention;
Figure 2 illustrates the apparent image produced by placing the image of Figure 1 at a predetermined image position as viewed from a predetermined viewing position;
Figure 3 illustrates a simple transformation of the image of Figure 1;
Figure 4 illustrates the apparent image produced by the transformed image of Figure 3 positioned at the predetermined image position of Figure 2;
Figure 5 illustrates a simple inverse perspective transformation of the original image of Figure 1;
Figure 6 illustrates the apparent image produced by the transformed image of Figure 5 positioned at the predetermined image position of Figs. 2 and 4;
Figure 7 illustrates the presentation of the image of Figure 1 in accordance with the present invention;
Figure 8 illustrates the apparent image produced by the image of Figure 7 when positioned at the predetermined image position of Figure 2, 4 and 6;
Figure 9 illustrates a further example of an image presented in accordance with the present invention;
Figure 10 illustrates a second original image to be presented in accordance with the present invention;
Figure 11 illustrates the presentation of the image of Figure 10 using conventional advertising hoardings;
Figure 12 illustrates the apparent image produced by presenting the image of Figure 10 in accordance with the present invention; and
Figure 13 illustrates an inverse perspective transformation of the image of Figure 10 used in presentation of the image in accordance with the present invention to produce the apparent image illustrated in Figure 12.

Throughout the following description and claims certain terms are to be given the meanings defined below.

**Original Image** - This is the original image to be presented, i.e. the image as it is intended to appear to an observer when presented on a two dimensional surface normal to the observers line of sight.

**Actual Image** - This is the actual image placed in position for viewing.

**Apparent Image** - This is the image as it appears from a predefined viewing position (defined below).

**Longitudinal and Latitudinal Dimensions of Image** - A two dimensional image having a particular orientation with respect to the observer can be regarded as having a latitudinal (transverse) dimension and a longitudinal dimension. These dimensions equate to the width and height of an image respectively. For an image with no predetermined orientation, such as a circle, orthogonal longitudinal and latitudinal dimensions can be arbiterally determined, the base of the image then constituting an extremity of the image in a longitudinal direction.

**A Longitudinal Image Line** - Image points extending along a longitudinal line of the original image.

**A Latitudinal Image Line** - Image points extending along a latitudinal line of the original image.

**Base of Image** - The lowest point or line of the image having regard to the longitudinal dimension of the image.

**Laterally Skewed** - Skewing of longitudinal image lines such that they are slanted to the longitudinal direction of the original image. Image points of a laterally skewed actual image may retain their longitudinal position but will have a lateral displacement relative to their position in the original image, the lateral displacement increasing with longitudinal distance from the base of the image.

**Predetermined Image Position** - The position at which the image is to be placed for viewing.

**Predetermined Viewing Position** - A predetermined viewing position with respect to which the presentation of the image is to be optimised (for instance the mounting location of a television camera or the like).

**Line of Sight** - Imaginary line extending from the predetermined viewing position to the predetermined image position.

**Direction of Line of Sight** - The actual image level direction of the line of sight, i.e. the vertical projection of the line of sight on the actual image when at the predetermined image position.

**Inverse Perspective Transformation** - A transformation of the original image made to compensate for any of the natural perspective effects arising when the image is positioned at said predetermined image position and viewed from said predetermined viewing position.

**Full inverse perspective transformation** - A transformation of the original image comprising stretching the image along the line of sight, increasing the spacing of image features along the line of sight, and diverging lines extending away from the viewing position along the line of sight - intended to compensate for all three natural perspective effects as discussed in the introduction to this specification.

The present invention will now be exemplified with reference to the presentation of an advertisement positioned at a predetermined image position at pitch level at a football match and optimised for viewing by a TV camera mounted at a predetermined viewing position.

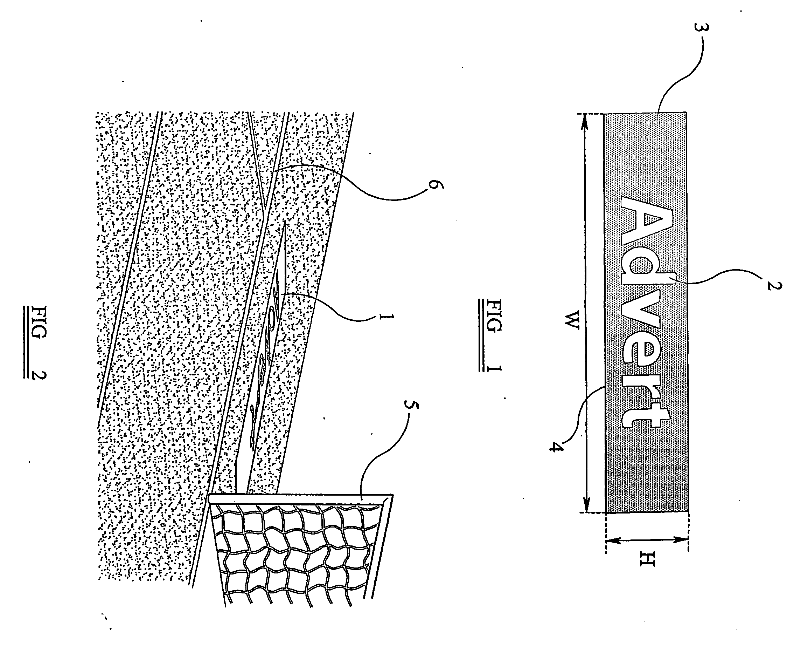

Figure 1 illustrates an original image 1 comprising text 2 on a rectangular background 3. The image has a latitudinal base line 4 of width W and a longitudinal dimension of height H.
Figure 2 illustrates the appearance of the image 1 positioned in a predetermined position on the surface of a football pitch adjacent to the mouth of a goal 5, with base line 4 parallel to the pitch goal line 6, as viewed from a TV camera positioned at a predetermined viewing position. The viewing angle apparent from Figure 2 is typical of actual TV camera positioning relative to the goal area of a football pitch. From Figure 2 it can be seen that the apparent image is distorted, and in particular appears squashed, so that it is almost illegible.

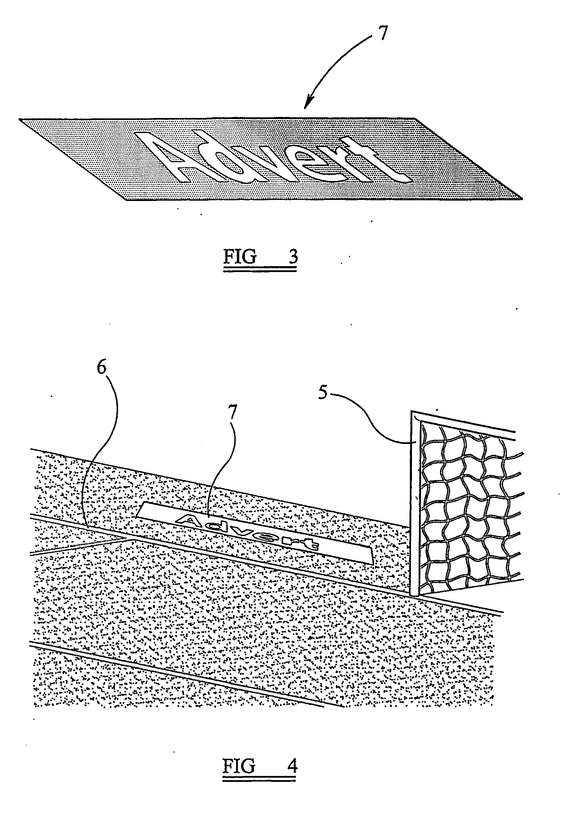

Figure 3 illustrates a transformation of the original image 1, to produce a transformed or actual, image 7, by laterally skewing the image so that longitudinal image lines are slanted relative to the base line 2 in a direction corresponding to the direction of line of sight of the TV camera. In skewing the image as shown in Figure 3 the overall height H of the image is unchanged, as is the width W of the base line 4.
Figure 4 illustrates the appearance of the skewed image of Figure 3 when positioned at the predetermined image position of Figure 2 and viewed from the same predetermined viewing position. It will be seen that the simple transformation of skewing the image so that longitudinal lines of the image are slanted along the line of sight greatly improves the clarity of the apparent image.

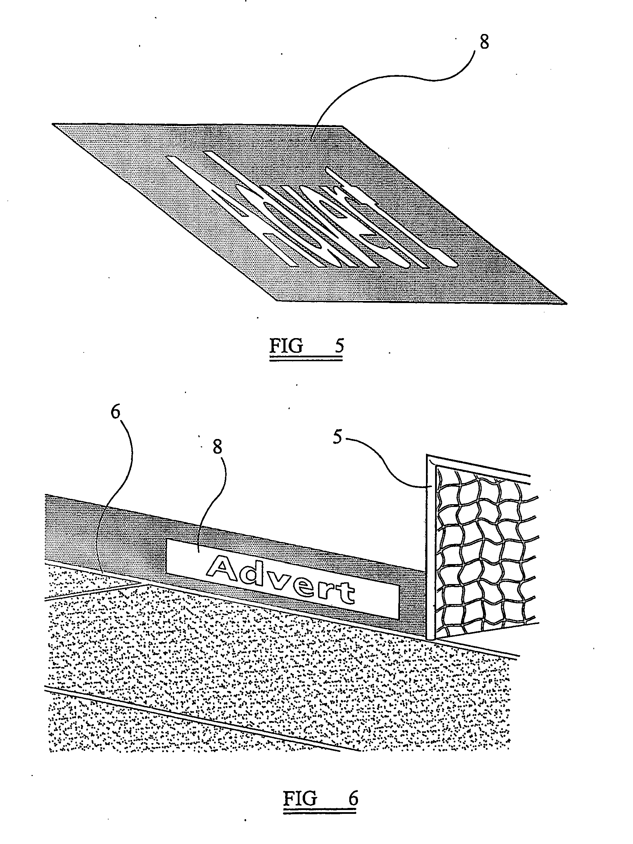

Figure 5 shows the skewed image of Figure 3 further transformed by stretching the image in the direction of the line of sight for the predetermined image position and viewing position of Figures 2 and 4, producing a new actual image 8. It can be seen that the overall height H of the image is increased, as is the surface area or "footprint" of the image (again the width W of the base line 6 is unchanged).
Figure 6 illustrates the appearance of the actual image 8 when placed at the predetermined image position of Figures 2 and 4 and viewed from the same predetermined viewing position. The difference in apparent image compared with that of Figures 2 and 4 is dramatic. The apparent image is clearer, has a much larger apparent size, and appears to lie in a plane at an angle to the playing surface (of the order of 90°).

The transformed image 8 gives the advantages in appearance referred to above in relation to known methods of presenting images using a full inverse perspective transformation. However, it also has the same disadvantage of a relatively large footprint for a given apparent image size as can be seen from comparing the size of the actual image 8 of Figure 5 with the size of the original image 1 shown in Figure 1.

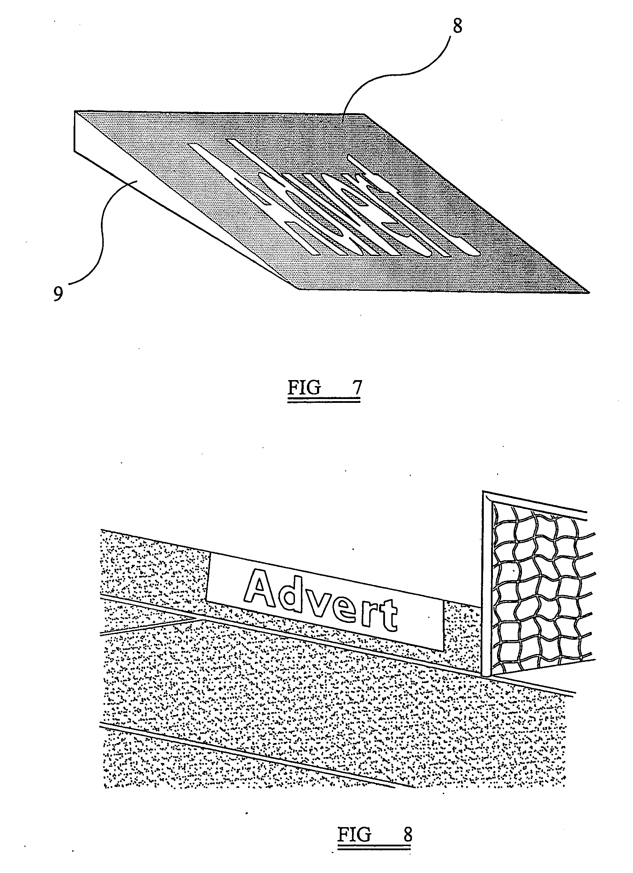

Referring now to Figure 7, this illustrates presentation of the image 1 in accordance with the present invention. The original image 1 is transformed by both skewing and stretching the image in the direction of the line of sight having regard to the predetermined image position and predetermined viewing position to again produce the transformed image 8. However, in accordance with the present invention the image 1 is laid on the inclined upper surface of a support wedge 9, the angle of inclination being approximately 7°.

Figure 8 shows the resultant apparent image when the inclined actual image 8 is located at the predetermined image position of Figures 2, 4 and 6, and viewed from the same predetermined viewing position. It is immediately obvious that the apparent image is substantially larger than that presented when the same actual image 8 is laid on the ground surface (the wedge support 9 is not visible). In fact, the apparent image is of the order of 40% larger than the apparent image of Figure 6. Thus, in accordance with the present invention it can be seen that by adopting the seemingly simple expedient of inclining the image to the supporting surface a surprisingly significant increase in apparent image size can be obtained from a relatively small angle of inclination. Indeed, the angle of inclination may be so small that it would be acceptable to locate the image in areas where previously only surface applied images would normally be allowed, such as adjacent the goal mouth of a football pitch as shown. In other words, the relatively narrow wedge does not present a potentially hazardous obstacle.

Although the present invention contemplates any acute angle of inclination, in practice good results have been achieved with angles of inclination less than 7°, for instance in the range of 1 to 5°. For example, an actual image having a length (in the direction of the line of sight) of the order of two to three metres might typically be raised at its rear edge by of the order of 50mm to 150mm.

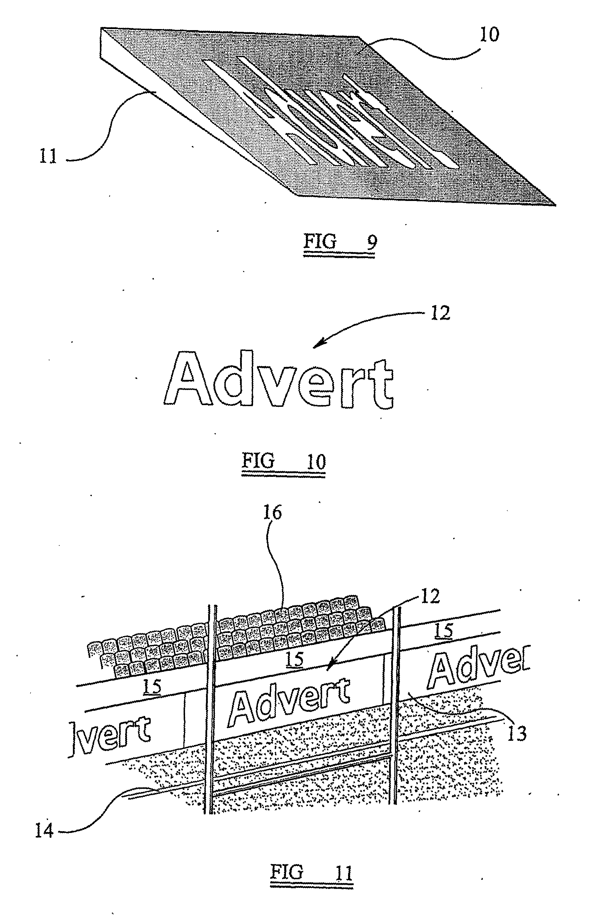

Accordingly, the present invention can provide a significant enlargement in apparent image size without any increase in the footprint of the actual image. Conversely, the present invention may be employed to present an image with a desired apparent image size but with a reduced actual image foot print as compared with presentation of the image by known inverse perspective transformation techniques. For example, Figure 9 illustrates an image 10 transformed in accordance with the present invention by skewing and stretching the original image 1 in the direction of the intended line of sight and placing the actual image 10 on support wedge 11 again of approximately 7° angle, the actual image 10 being sized to present an apparent image corresponding to that shown in Figure 6. Thus by comparison of Figure 9 with Figure 5, it can be seen that adopting the seemingly simple expedient of laying the image on an inclined support greatly reduces the footprint required to present an apparent image of a given size. Thus the present invention also provides advantages where available space is limited.

It will be appreciated that skewing the image as described above is desirable when the actual image is to be positioned with the base line of the image extending at an oblique angle to the direction of the line of sight. It will also be appreciated that in some embodiments of the invention the image may be skewed without any other transformation, such as stretching the image or applying a full inferrous perspective transformation. Skewing the image in this way can greatly improve the clarity of the apparent image. However, in circumstances when the actual image can be placed with the base line of the image extending at right angles to the direction of the line of sight it will not be necessary to skew the image, rather the image can be simply stretched (or otherwise transformed in accordance with an inverse perspective transformation). Similarly, skewing would not be required if the apparent image is not required to face the camera, for instance preserving an oblique orientation of the actual image.

It will also be appreciated that whilst simple stretching is sufficient to present an image without significant apparent distortion due to perspective effects, the present invention also encompasses transformation of the image by a full inverse perspective transformation as disclosed for instance in EP 0968495 mentioned above.

It will also be appreciated that the angle of inclination of the image support surface, i. e. the angle of the wedged support members 9 and 11, may vary from that illustrated. For instance, for a given actual image footprint, the apparent image size can be maximised by increasing the angle of inclination of the wedge support surface provided the overall height of the wedged support is acceptable for the particular circumstances. That is, as the height of the wedge increases there is an increasing likelihood of encountering the disadvantages of conventional advertising hoardings in terms of restricted viewing and presentation of a potentially hazardous obstacle.

In accordance with the present invention the wedged support constructed from a foam or other impact absorbing material. For example, it is envisaged that a narrow angled wedge of a foam material could be placed immediately adjacent the active areas of a sports field without presenting a hazardous obstacle.

Referring now to Figure 10, this depicts an original image 12 comprising the text only of the image of Figure 1. Figure 11 illustrates presentation of the image of Figure 10 on conventional advertising hoardings 13 running parallel to the goal line 14 of a rugby pitch. Figure 11 also shows that due to the height of the advertising hoardings the first couple of rows of seats 15 in the spectator stand 16 would provide a restricted view and thus are covered to prevent occupation. This is a common sight at sports grounds, particularly where advertising hoardings which are not normally present are put in place specifically for particular events that are to be televised.

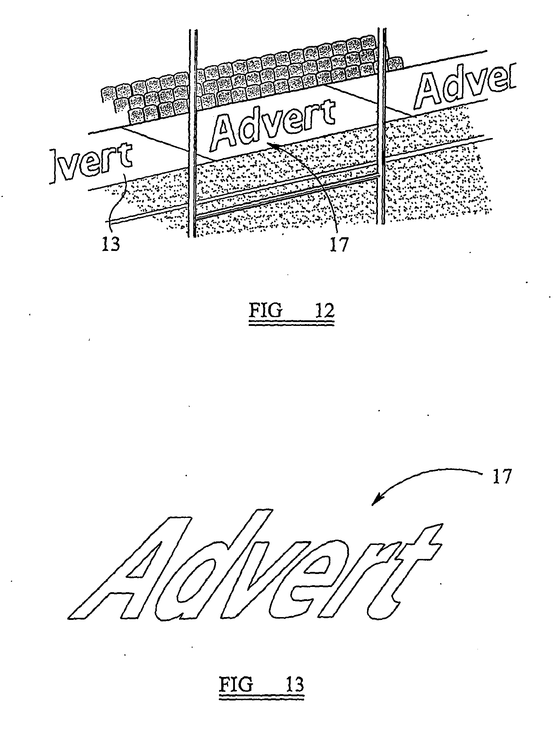

In accordance with the present invention it is possible to present an image with an apparent size and orientation as shown in Figure a by laying the image on an inclined support surface and skewing and stretching the image in the direction of the intended line of sight, or otherwise applying an inverse perspective transformation to the image. Thus, Figure 12 shows images presented on inclined hoardings 13 in accordance with the present invention to present the apparent image of Figure 11 but leaving lower rows of seats with an unrestricted view. Figure 13 shows the transformed actual image 17 applied to the inclined surface to present the apparent image of Figure 12. The original image of Figure 10 is both stretched and skewed in the direction of line of sight to produce the transformed actual image 17.

The above examples illustrate presentation of an image in accordance with the present invention to optimise the appearance of the image when viewed from a fixed viewing position said as a TV camera position. It will be appreciated that the predetermined viewing position need not necessarily be a fixed camera position, and that the location of the image need not be a football match or indeed a sporting event. Other applications of the present invention will be readily apparent to the appropriately skilled person.

## Claims

1. A method of presenting an image at a predetermined image position defined by a substantially horizontal surface and optimised for viewing along a line of sight from a predetermined viewing position defined by a surface, the method comprising transforming the image by applying an image transformation to the original image (1) with respect to the intended line of sight and intended orientation of the image at said predetermined image position, thereby producing a transformed actual image (8), and placing the transformed actual image (8) in said orientation at said predetermined image position, wherein the actual image is inclined towards the predetermined viewing position at an acute angle to the horizontal, wherein the transferred actual image (8) is laid on a support (9) which raises the rear of the image with respect (8) to the predetermined viewing position above said surface and to a height above that of the front of the image (8) with respect to the predetermined viewing position, **characterised in that** said support (9) is a substantially wedge shaped support structure constructed from an impact absorbing material.

2. A method according to claim 1, wherein the image is to be presented at a predetermined image position defined by a ground surface.

3. A method according to claim 2, wherein the transformed actual image (8) is inclined at an acute angle to the surface.

4. A method according to claim 3, wherein the angle of inclination is less than 7°.

5. A method according to claim 4, wherein the angle of inclination is in the range of 1° to 5°

6. A method according to claim 5, wherein the transformed actual image (8) has a dimension along the line of sight of between 1 metre and 5 metres.

7. A method according to claim 6, wherein said dimension is in the range of two metres to four metres.

8. A method according to any preceding claim, wherein said support structure (9) is at least partly constructed from a foam material.

9. A method according to any preceding claim, wherein said image transformation is an inverse perspective transformation.

10. A method according to claim 9, wherein transforming the original image (1) to produce said transformed actual image (8) comprises stretching the original image (1) along the intended line of sight having regard to the intended orientation of the image at said predetermined image position.

11. A method according to claim 10, wherein transforming the original image (1) to produce said transformed actual image (8) comprises applying a full inverse perspective transformation to the original image having regard to the line of sight and intended orientation of the actual image at said predetermined image position.

12. A method according to any preceding claim, wherein transforming said original image (1) to produce said transformed actual image (8) comprises laterally skewing the original image so that the image is slanted along the intended line of sight having regard to the intended orientation of the actual image at the predetermined image position.

13. A method according to any preceding claim, further comprising positioning an image recording and/or transmitting device at said predetermined viewing position so that the image may be viewed remotely.

14. A method according to claim 13, wherein said image recording and/or transmitting device comprises a television camera broadcasting the image to a television audience.

## Patentansprüche

1. Verfahren zum Präsentieren eines Bildes in einer vorbestimmten Bildposition, die durch eine im wesentlichen horizontale Oberfläche definiert und für die Betrachtung entlang einer Sichtlinie von einer vorbestimmten durch eine Oberfläche definierten Betrachtungsposition optimiert ist, wobei das Verfahren umfasst: Transformieren des Bildes durch Anwenden einer Bildtransformation auf das Originalbild (1) in Bezug auf die gewünschte Sichtlinie und gewünschte Orientierung des Bildes in der vorbestimmten Bildposition, wodurch ein transformiertes tatsächliches Bild (8) erzeugt wird, und Anordnen des transformierten tatsächlichen Bildes (8) in der Orientierung in der vorbestimmten Bildposition, wobei das tatsächliche Bild zur vorbestimmten Betrachtungsposition um einen spitzen Winkel zur Horizontalen geneigt wird, wobei das transformierte tatsächliche Bild (8) auf einen Träger (9) gelegt wird, der den hinteren Teil des Bildes (8) in Bezug auf die vorbestimmte Betrachtungsposition über die Oberfläche und zu einer Höhe oberhalb derjenigen des vorderen Teils des Bildes (8) in Bezug auf die vorbestimmte Betrachtungsposition anhebt, **dadurch gekennzeichnet, dass** der Träger (9) eine im wesentlichen keilförmige Trägerstruktur ist, die aus einem stoßdämpfenden Material aufgebaut ist.

2. Verfahren nach Anspruch 1, wobei das Bild in einer vorbestimmten Bildposition, die durch eine Bodenoberfläche definiert ist, präsentiert werden soll.

3. Verfahren nach Anspruch 2, wobei das transformierte tatsächliche Bild (8) zu der Oberfläche um einen spitzen Winkel geneigt ist.

4. Verfahren nach Anspruch 3, wobei der Neigungswinkel weniger als 7° beträgt.

5. Verfahren nach Anspruch 4, wobei der Neigungswinkel im Bereich von 1° bis 5° liegt.

6. Verfahren nach Anspruch 5, wobei das transformierte tatsächliche Bild (8) eine Abmessung entlang der Sichtlinie zwischen 1 Meter und 5 Metern hat.

7. Verfahren nach Anspruch 6, wobei die Abmessung im Bereich von zwei Metern bis vier Metern liegt.

8. Verfahren nach einem der vorhergehenden Ansprüche, wobei die Trägerstruktur (9) zumindest teilweise aus einem Schaummaterial aufgebaut ist.

9. Verfahren nach einem der vorhergehenden Ansprüche, wobei die Bildtransformation eine inverse perspektivische Transformation ist.

10. Verfahren nach Anspruch 9, wobei das Transformieren des Originalbildes (1), um das transformierte tatsächliche Bild (8) zu erzeugen, umfasst: Strecken des Originalbildes (1) entlang der gewünschten Sichtlinie unter Beachtung der gewünschten Orientierung des Bildes in der vorbestimmten Bildposition.

11. Verfahren nach Anspruch 10, wobei das Transformieren des Originalbildes (1), um das transformierte tatsächliche Bild (8) zu erzeugen, umfasst: Anwenden einer vollständigen inversen perspektivischen Transformation auf das Original bild unter Beachtung der Sichtlinie und der gewünschten Orientierung des tatsächlichen Bildes in der vorbestimmten Bildposition.

12. Verfahren nach einem der vorhergehenden Ansprüche, wobei das Transformieren des Originalbildes (1), um das transformierte tatsächliche Bild (8) zu erzeugen, umfasst: Seitliches Schrägstellen des Originalbildes, so dass das Bild entlang der gewünschten Sichtlinie unter Beachtung der gewünschten Orientierung des tatsächlichen Bildes in der vorbestimmten Bildposition geneigt wird.

13. Verfahren nach einem der vorhergehenden Ansprüche, ferner umfassend: Positionieren einer Bildaufzeichnungs- und/oder -übertragungsvorrichtung in der vorbestimmten Betrachtungsposition, so dass das Bild von fern betrachtet werden kann.

14. Verfahren nach Anspruch 13, wobei die Bildaufzeichnungs- und/oder - übertragungsvorrichtung eine Fernsehkamera umfasst, die das Bild an ein Fernsehpublikum sendet.

## Revendications

1. Procédé de présentation d'une image à une position d'image prédéterminée définie par une surface sensiblement horizontale et optimisée pour une observation le long d'une ligne de visée à partir d'une position d'observation prédéterminée définie par une surface, le procédé consistant à transformer l'image en appliquant une transformation d'image à l'image originale (1) par rapport à la ligne de visée voulue et à l'orientation voulue de l'image à ladite position d'image prédéterminée, produisant de ce fait une image réelle transformée (8), et placer l'image réelle transformée (8) dans ladite orientation à ladite position d'image prédéterminé, dans lequel l'image réelle est inclinée vers la position d'observation prédéterminée selon un angle aigu par rapport à l'horizontale, dans lequel l'image réelle transférée (8) est disposée sur un support (9) qui élève l'arrière de l'image (8) par rapport à la position d'observation prédéterminée au-dessus de ladite surface et à une hauteur au-dessus de celle de l'avant de l'image (8) par rapport à la position d'observation prédéterminée, **caractérisé en ce que** ledit support (9) est une structure de support sensiblement en forme de coin construite à partir d'un matériau absorbant les chocs.

2. Procédé selon la revendication 1, dans lequel l'image doit être présentée à une position d'image prédéterminée définie par une surface de sol.

3. Procédé selon la revendication 2, dans lequel l'image réelle transformée (8) est inclinée selon un angle aigu par rapport à la surface.

4. Procédé selon la revendication 3, dans lequel l'angle d'inclinaison est inférieur à 7°.

5. Procédé selon la revendication 4, dans lequel l'angle d'inclinaison est dans la plage de 1° à 5°.

6. Procédé selon la revendication 5, dans lequel l'image réelle transformée (8) a une dimension le long de la ligne de visée comprise entre 1 mètre et 5 mètres.

7. Procédé selon la revendication 6, dans lequel ladite dimension est dans la plage de 2 mètres à 4 mètres.

8. Procédé selon l'une quelconque des revendications précédentes, dans lequel ladite structure de support (9) est au moins partiellement construite à partir d'un matériau alvéolaire.

9. Procédé selon l'une quelconque des revendications précédentes, dans lequel ladite transformation d'image est une transformation de perspective inverse.

10. Procédé selon la revendication 9, dans lequel la transformation de l'image originale (1) pour produire ladite image réelle transformée (8) comprend l'étirement de l'image originale (1) le long de la ligne de visée voulue en tenant compte de l'orientation voulue de l'image à ladite position d'image prédéterminée.

11. Procédé selon la revendication 10, dans lequel la transformation de l'image originale (1) pour produire ladite image réelle transformée (8) comprend l'application d'une transformation de perspective inverse complète à l'image originale en tenant compte de la ligne de visée et de l'orientation voulue de l'image réelle à ladite position d'image prédéterminée.

12. Procédé selon l'une quelconque des revendications précédentes, dans lequel la transformation de ladite image originale (1) pour produire ladite image réelle transformée (8) consiste à déformer latéralement l'image originale de sorte que l'image soit inclinée le long de la ligne de visée voulue en tenant compte de l'orientation voulue de l'image réelle à la position d'image prédéterminée.

13. Procédé selon l'une quelconque des revendications précédentes, comprenant en outre le positionnement d'un dispositif d'enregistrement et/ou de transmission d'image à ladite position d'observation prédéterminée de sorte que l'image puisse être vue à distance.

14. Procédé selon la revendication 13, dans lequel ledit dispositif d'enregistrement et/ou de transmission d'image comprend une caméra de télévision diffusant l'image à des téléspectateurs.
